## Europäisches Patentamt
## European Patent Office
## Office européen des brevets

(19)

(11) Veröffentlichungsnummer: **0 018 027**
**B1**

(12)

# EUROPÄISCHE PATENTSCHRIFT

(45) Veröffentlichungstag der Patentschrift:
**13.04.83**

(51) Int. Cl.³: **F 02 F 5/00**

(21) Anmeldenummer: **80200282.4**

(22) Anmeldetag: **27.03.80**

(54) **Kolben mit Ringträger.**

(30) Priorität: **24.04.79 DE 2916441**

(43) Veröffentlichungstag der Anmeldung:
**29.10.80 Patentblatt 80/22**

(45) Bekanntmachung des Hinweises auf die Patenterteilung:
**13.04.83 Patentblatt 83/15**

(84) Benannte Vertragsstaaten:
**DE FR GB IT**

(56) Entgegenhaltungen:
**DE-A-2 243 230**
**FR-A-932 036**
**FR-A-1 288 819**
**GB-A-186 060**
**US-A-2 880 044**

(73) Patentinhaber: **KARL SCHMIDT GMBH,
Christian-Schmidt-Strasse 8/12 Postfach 1351,
D-7107 Neckarsulm (DE)**

(72) Erfinder: **Schieber, Gerhard, Lerchenstrasse 7,
D-7107 Bad Wimpfen (DE)**

(74) Vertreter: **Fischer, Ernst, Dr., Reuterweg 14,
D-6000 Frankfurt am Main 1 (DE)**

## Kolben mit Ringträger

Die Erfindung betrifft einen Kolben für hochbelastete Brennkraftmaschinen, insbesondere mit im Kolbenboden angeordneter Brennraummulde, bei dem wenigstens der oberste Verdichtungsring in einem aus einem verschleißfesten Werkstoff bestehenden in eine Ausnehmung am Kolbenkörper eingeschraubten Ringträger gelagert ist.

Die starke Zunahme der Verkehrsdichte und die rasche Ausbreitung der Industrie haben zu einer Schadstoffbelastung der Atmosphäre geführt, die gesundheitliche und materielle Schäden verursacht. Man ist daher bestrebt, den Schadstoffanteil so niedrig wie möglich abzusenken. Insbesondere sind in den Abgasen von mit Kohlenwasserstoffen betriebenen Brennkraftmaschinen eine Reihe von Bestandteilen enthalten, deren Emission wegen ihrer Giftigkeit oder aus anderen Gründen unerwünscht ist. Als solche sind Kohlenmonoxide, Stickoxide und Kohlenwasserstoffe zu nennen. Die Emission dieser Schadstoffe wird in zunehmendem Maße durch entsprechende Vorschriften begrenzt.

Der Schadstoffanteil in Abgasen von Brennkraftmaschinen ist dann am niedrigsten, wenn eine vollständige Verbrennung des Kraftstoff-Luft-Gemisches im Brennraum erzielt wird. Dieses ist in der Regel jedoch nicht möglich, da das in dem Ringspalt zwischen Feuersteg und Zylinderlaufbahn befindliche Kraftstoff-Luft-Gemisch nur partiell umsetzt oder verbrennt und die nicht umgesetzten bzw. unverbrannten Bestandteile als Schadstoffe mit dem Abgas an die Atmosphäre gelangen. Darüber hinaus wird auf diese Weise auch der Verbrauch an Kraftstoff unnötig erhöht.

Die Überlegung, den den Brennraum begrenzenden obersten Verdichtungsring im Bereich des Feuersteges anzubringen, scheitert daran, daß bei dem in diesem Bereich herrschenden Temperaturen das Öl verbrennt und somit eine ausreichende Schmierölversorgung zwischen Verdichtungsring und Zylinderlaufbahn nicht mehr gewährleistet ist. Volle Betriebssicherheit wird nur dann erreicht, wenn der erste Verdichtungsring im Temperaturbereich von 200 bis maximal 250°C angeordnet ist. Erfahrungsgemäß ergibt das bei den heute üblichen Brennverfahren eine Feuersteghöhe von 15 bis 20% des Kolbendurchmessers.

Um den obersten Verdichtungsring so nah wie möglich an der Oberkante des Feuersteges anordnen zu können und damit den Ringspalt zwischen Feuersteg und Zylinderlaufbahn klein zu halten, ist es bekannt, bei einem Leichtmetallkolben Feuersteg und Ringfeld mit einem ringförmigen, aus einem Eisenwerkstoff bestehenden Körper zu armieren, wobei wenig unterhalb der Oberkante des Feuersteges der erste Verdichtungsring angebracht ist (US-PS 2 880 044).

Eine andere Möglichkeit ist darin zu sehen, die oberste Ringnute des Ringfeldes und den Feuersteg im Bereich seiner Oberkante mit je einem vollen Ringträger zu armieren, wobei der Abstand zwischen den beiden Ringträgern, die über vom Kolbenwerkstoff umgebene Stege bzw. Rippen fest miteinander verbunden sind, wenigstens der halben Höhe eines Ringträgers entspricht. Die Ringträger können mittels einer intermetallischen Bindung oder einem Schraubgewinde mit dem Kolbenkörper verbunden sein (DE-OS 2 243 230).

Diese Kolbenausführungsformen sind über das Versuchsstadium nicht hinausgekommen, da durch den guten Wärmeübergang und die gute Wärmeleitung vom Kolbenboden zu dem Ringträger die Temperatur unzulässig hoch ansteigt. Ferner hat sich herausgestellt, daß bei Dauerbeanspruchung eine Zerstörung der hochtemperaturempfindlichen intermetallischen Zwischenschicht bzw. ein Lockern der Schraubverbindung unvermeidlich ist.

Aufgabe der vorliegenden Erfindung ist es, bei einem Kolben der eingangs beschriebenen Bauart die Verbindung zwischen Ringträger und Kolbenkörper so zu gestalten, daß ein unzulässig hoher Wärmeübergang vermieden und die Gefahr des Lockerns des Ringträgers vermieden wird.

Die Lösung dieser Aufgabe besteht darin, daß das Schraubgewinde nur im kolbenschaftseitigen Teil des Ringträgers angeordnet ist und oberhalb der Schraubverbindung nur eine stegförmige, als Dichtstelle dienende, mit dem Ringträger verbundene Kontaktbrücke zwischen dem Ringträger und dem Kolbenkopf besteht.

Die Schraubverbindung ist somit in einer Zone angeordnet, in der aufgrund des am Kolbenkopf herrschenden Temperaturgefälles eine Temperatur vorliegt, bei der die Festigkeit des Kolbenwerkstoffs nicht beeinträchtigt wird. Bei der Verwendung einer Aluminiumkolbenlegierung darf diese Temperatur nicht wesentlich über 200°C liegen. Der oberste Verdichtungsring ist in vorteilhafter Weise nahe der Kolbenoberkante angeordnet und durch den ihn aufnehmenden Ringträger gegen die hohen Brennraumtemperaturen abgeschirmt, wodurch seine Funktion im Betrieb gewährleistet ist.

Gleichzeitig wird durch die relativ schmale Kontaktbrücke in der dem Brennraum am nächsten liegenden obersten Ringnute eine niedrigere Temperatur erzielt, wodurch die Funktion des Ringträgers und des Verdichtungsrings günstig beeinflußt werden.

Beim Aufschrauben des Ringträgers auf den Kolbenkopf kann es zweckmäßig sein, diesen vorher zu erwärmen, so daß das Gewinde und der Abdichtsteg mit Überdeckung zusammengefügt werden können, wodurch eine weitere Erhöhung der Betriebssicherheit erzielt wird. Als ausgesprochen sinnvoll hat sich erwiesen, wenn oberhalb der Schraubverbindung zwischen dem Ringträger und dem Kolbenkopf ein Spalt besteht, der gegenüber dem Brennraum durch die Kontaktbrücke abgeschlossen ist.

Eine besonders gute Wirkung ergibt sich, wenn nach einem weiteren Merkmal der Erfindung die Kontaktbrücke labyrinthartig gestaltet ist, vorzugsweise aus sägezahnartig angeordneten umlaufenden Rippen besteht. In die zwischen den Rippen befindlichen Rillen kann sich der Kolbenwerkstoff bei Überbeanspruchung hineinverformen, da bei Brennkraftmaschinen mit im Kolbenboden liegender Brennraummulde vergleichsweise hohe Temperaturspannungen zwischen dem heißen Bereich Muldenrand/Ringträger-Kontaktzone und dem kälteren Ringträger selbst unvermeidlich sind, wodurch die elastischen Verformungsmöglichkeiten des verwendeten Kolbenwerkstoffs oftmals überschritten werden.

In verschiedenen Fällen hat es sich auch bewährt, wenn die Kontaktbrücke unmittelbar über dem Schraubgewinde angeordnet und der Spalt zum Brennraum hin offen bleibt.

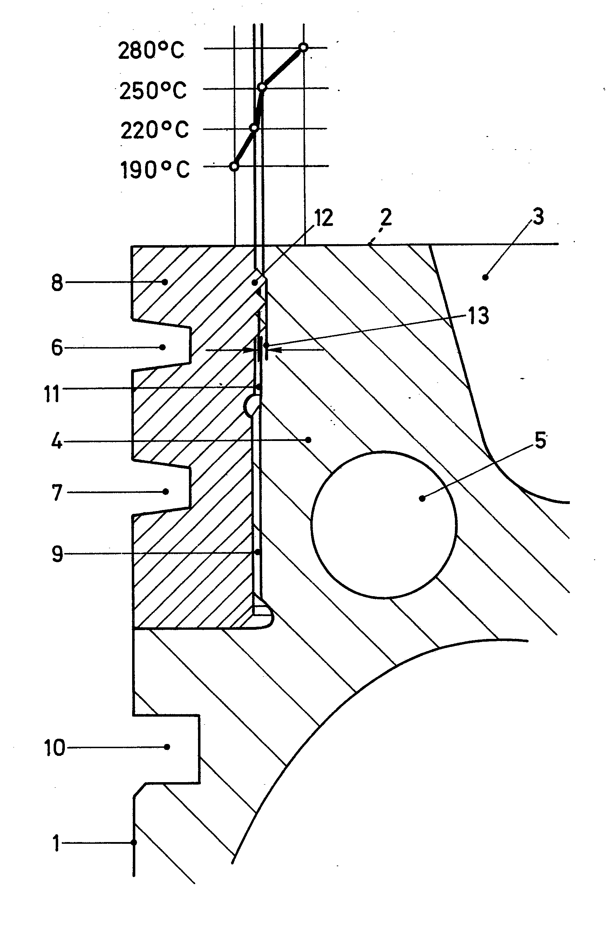

Die Erfindung ist in der Zeichnung anhand eines Ausführungsbeispiels näher erläutert:

Bei einem Kolben 1 mit im Kolbenboden 2 befindlicher Brennraummulde 3 und einem im Kolbenkopf 4 umlaufenden Kühlkanal 5 ist auf den entsprechend auf seinem Umfang durch eine Ausnehmung zurückgesetzten Kolbenkopf ein aus einem hochwertigen Eisenwerkstoff bestehender, mit den Ringnuten 6, 7 versehener Ringträger 8 aufgeschraubt. Auf der Innenseite des Ringträgers ist im Bereich der zweiten Ringnute 7 ein Gewinde 9 angebracht, über das der Ringträger 8 mit dem Kolbenkopf 4 verbunden ist. Die Ringnute 10 dient zur Aufnahme des Ölabstreifrings. Oberhalb des Schraubgewindes 9 befindet sich zwischen dem Ringträger 8 und dem Kolbenkopf 4 ein Ringspalt 11, der gegen den Brennraum durch die sägezahnartig angeordneten umlaufenden, als Kontaktbrücke dienenden Rippen 12 labyrinthartig durch die Überdeckungszone 13 abgedichtet ist. In der Zeichnung ist ergänzend das durch die erfindungsgemäße Anordnung des Ringträgers 8 erzielte Temperaturgefälle für den Bereich Kolbenoberkante/oberste Ringnut dargestellt.

## Patentansprüche

1. Kolben für hochbelastete Brennkraftmaschinen, vorzugsweise mit im Kolbenboden angeordneter Brennraummulde, bei dem wenigstens der oberste Verdichtungsring in einem aus einem verschleißfesten Werkstoff bestehenden, in eine Ausnehmung am Kolbenkörper eingeschraubten Ringträger gelagert ist, dadurch gekennzeichnet, daß das Schraubgewinde (9) im kolbenschaftseitigen Teil des Ringträgers (8) angeordnet ist und oberhalb der Schraubverbindung eine stegförmige, als Dichtstelle dienende, mit dem Ringträger verbundene Kontaktbrücke (12) zwischen dem Ringträger und dem Kolbenkopf (4)

besteht.

2. Kolben nach Anspruch 1, dadurch gekennzeichnet, daß oberhalb der Schraubverbindung ein Spalt (11) zwischen dem Kolbenkopf und Ringträger besteht, der zum Brennraum hin durch die Kontaktbrücke (12) abgedichtet ist.

3. Kolben nach den Ansprüchen 1 und 2, dadurch gekennzeichnet, daß die Kontaktbrücke (12) labyrinthartig gestaltet ist.

4. Kolben nach Anspruch 3, dadurch gekennzeichnet, daß die Kontaktbrücke (12) aus sägezahnartig angeordneten umlaufenden Rippen besteht.

5. Kolben nach Anspruch 1, dadurch gekennzeichnet, daß die Kontaktbrücke (12) unmittelbar über dem Schraubgewinde (9) angebracht ist.

## Claims

1. A piston for high-duty internal-combustion engines, particularly to a piston which has a piston head formed with a combustion chamber recess and which comprises a piston ring carrier, which consists of wear-resisting material and is screwed on the piston body in a recess thereof and carries at least the uppermost compression ring, charaterized in that the screwthreaded joint (9) is arranged only in that portion of the ring carrier (8) which is adjacent to the skirt of the piston whereas above the screw-threaded joint there is only a web-like contact bridge (12) between the ring carrier and the piston body (4), which contact bridge is joined to the ring carrier and effects a seal.

2. A piston according to claim 1, characterized in that a gap (11) is defined between the piston body and ring carrier above the screw-threated joint and is sealed from the combustion chamber by the contact bridge (12).

3. A piston according to claims 1 and 2, characterized in that the contact bridge (12) defines a labyrinth.

4. A piston according to claim 3, characterized in that the contact bridge (12) consists of annular peripheral sawtooth ribs.

5. A piston according to claim 1, characterized in that the contact bridge (12) is closely spaced above the screw-threated joint (9).

## Revendications

1. Piston pour moteurs à combustion interne très chargés, de préférence à auge formant chambre de combustion ménagée dans le fond du piston, dans lequel au moins le segment de compression le plus haut est monté dans un support de segments constitué en un matériau résistant à l'usure et vissé dans un évidement du corps de piston, caractérisé en ce que le filetage de vis (9) est ménagé dans la partie du support (8) de segments qui se trouve du côté de la jupe de piston et au-dessus de la liaison par vissage est constitué entre le support de segments et la tête de piston (4) un pont de contact (12) en forme de barrette qui est reilié au support de segments et qui sert de zone d'étanchéité.

2. Piston suivant la revendication 1, caractérisé en ce qu'au-dessus de la liaison par visage est constitué entre la tête de piston et le support de segments un interstice (11), qui est rendu étanche par rapport à la chambre de combustion par le pont de contact (12).

3. Piston suivant les revendications 1 et 2, caractérisé en ce que le pont de contact (12) est de type à labyrinthe.

4. Piston suivant la revendication 3, caractérisé en ce que le pont de contact (12) est constitué de nervures sans fin de type en dents de scie.

5. Piston suivant la revendication 1, caractérisé en ce que le pont de contact (12) est fixé directement sur le filetage de vis (9).

280°C

250°C

220°C

190°C

12   2   3

8

13

6

11

4

5

7

9

10

1